# EUROPÄISCHE PATENTANMELDUNG

(11) **EP 2 821 644 A1**
(43) Veröffentlichungstag der Anmeldung: **07.01.2015**
(21) Anmeldenummer: 13174534.1
(22) Anmeldetag: 01.07.2013
(51) Int. Cl.: F03D 11/04, F03D 3/00, F03D 3/04

(54) **Windkraftmodul sowie Windkraftanlage zur Anordnung an einem Gebäude**

(71) Anmelder: Anerdgy AG, 8005 Zürich (CH)
(72) Erfinder: Köhler, Sven, 8134 Adliswil (CH)
(74) Vertreter: Daub, Thomas

(57) **Zusammenfassung**

Erfindungsgemäß wird ein Windkraftmodul zur Anordnung an einem Gebäude (11), mit zumindest einer unter Wirkung eines Luftstroms betreibbaren Windradeinrichtung (12), die zum Antrieb eines Generators vorgesehen ist, mit einer die Windradeinrichtung (12) aufnehmenden Gehäuseeinheit (13), die einen der Windradeinrichtung (12) vorgelagerten Einströmbereich (14) und einen der Windradeinrichtung (12) nachgelagerten Ausströmbereich (15) ausbildet, wobei der Einströmbereich (14) und der Ausströmbereich (15) unter einem mittleren Winkel (16) ungleich 180 Grad zueinander angeordnet sind, vorgeschlagen.

## Beschreibung

### Stand der Technik

Die Erfindung betrifft ein Windkraftmodul sowie eine Windkraftanlage zur Anordnung an einem Gebäude.

Es sind bereits Windkraftmodule zur Anordnung an einem Gebäude, mit zumindest einer unter Wirkung eines Luftstroms betreibbaren Windradeinrichtung, die zum Antrieb eines Generators vorgesehen ist, mit einer die Windradeinrichtung aufnehmenden Gehäuseeinheit, die einen der Windradeinrichtung vorgelagerten Einströmbereich und einen der Windradeinrichtung nachgelagerten Ausströmbereich ausbildet, bekannt.

Die Aufgabe der Erfindung besteht insbesondere darin, ein Windkraftmodul mit einem verbesserten Wirkungsrad insbesondere bei einer Anordnung an einem Gebäude bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einem Windkraftmodul zur Anordnung an einem Gebäude, mit zumindest einer unter Wirkung eines Luftstroms betreibbaren Windradeinrichtung, die zum Antrieb eines Generators vorgesehen ist, mit einer die Windradeinrichtung aufnehmenden Gehäuseeinheit, die einen der Windradeinrichtung vorgelagerten Einströmbereich und einen der Windradeinrichtung nachgelagerten Ausströmbereich ausbildet.

Es wird vorgeschlagen, dass der Einströmbereich und der Ausströmbereich unter einem mittleren Winkel ungleich 180 Grad zueinander angeordnet sind. Dadurch kann erreicht werden, dass der Luftstrom in dem Windkraftmodul umgelenkt wird, wodurch das Windkraftmodul insbesondere an Stellen angeordnet werden kann, an denen sich aufgrund der Umlenkung ein Staudruckbereich und ein Leebereich ausbilden, welche eine Druckdifferenz aufweisen. Durch ein erfindungsgemäßes Windkraftmodul kann diese Druckdifferenz genutzt werden, wodurch insbesondere durch Anordnung des Windkraftmoduls an einer Gebäudekante ein hoher Wirkungsgrad erreicht werden kann. Eine Anströmung der Gebäudekante und die sich dabei ausbildende Druckdifferenz kann dabei vorteilhaft genutzt werden, um einen Wirkungsrad von bis zu 95 Prozent zu erreichen, wodurch durch eine erfindungsgemäße Ausgestaltung ein besonders vorteilhafter Wirkungsgrad erreicht werden kann. Unter einem "Winkel zwischen dem Einströmbereich und dem Ausströmbereich" soll dabei insbesondere ein Winkel verstanden werden, unter dem eine mittlere Strömungsrichtung des Luftstroms in dem Einströmbereich und eine mittlere Strömungsrichtung des Luftstroms in dem Ausströmbereich zueinander orientiert sind. Unter einer "mittleren Strömungsrichtung" soll dabei insbesondere eine über den Einströmbereich oder den Ausströmbereich statistisch gemittelte, normierte Strömungsrichtung verstanden werden, die sich bei einem gleichmäßigen, parallel zu einer Aufstandsfläche gerichteten Wind in einer Umgebung des Windkraftmoduls einstellt. Unter "vorgesehen" soll insbesondere speziell ausgelegt und/oder ausgestattet verstanden werden.

Vorzugsweise beträgt der mittlere Winkel, der von dem Einströmbereich und dem Ausströmbereich eingeschlossen wird, zumindest 120 Grad und/oder höchstens 170 Grad. Dadurch kann eine besonders vorteilhafte Umlenkung erreicht werden, insbesondere bei einer Anordnung einer rechtwinklig abgewinkelten Gebäudekante, wie beispielsweise einem Hauseck oder einem Übergang zwischen einem Flachdach und einer Fassade. Der mittlere Winkel, der von dem Einströmbereich und dem Ausströmbereich eingeschlossen wird, beträgt dabei vorzugsweise in einer Ebene senkrecht zur Aufstandsebene zumindest 120 Grad und/oder höchstens 170 Grad.

Vorzugsweise weist der Einströmbereich einen Öffnungswinkel von zumindest 60 Grad auf. Dadurch kann insbesondere für einen Betrieb mittels eines Luftstroms ein besonders vorteilhafter Wirkungsgrad erreicht werden. Unter einem "Öffnungswinkel" soll dabei insbesondere ein Winkel bezogen auf eine Rotationsachse der Windradeinrichtung verstanden werden, und zwar insbesondere ein Winkel, der von zwei Geraden eingeschlossen wird, welche einen Rand einer Fläche schneiden, an der der Einströmbereich in einem Windradbereich übergeht. Unter einem "Windradbereich" soll dabei insbesondere ein strömungstechnisch zwischen dem Einströmbereich und dem Ausströmbereich angeordneter Bereich verstanden werden, welcher von der Windradeinrichtung ausgefüllt wird. Vorzugsweise ist der Öffnungswinkel kleiner als 120 Grad.

Vorzugsweise weist der Ausströmbereich ebenfalls einen Öffnungswinkel von zumindest 60 Grad auf. Dadurch kann der Wirkungsgrad weiter verbessert werden, insbesondere wenn der Einströmbereich und der Ausströmbereich nahezu symmetrisch sind, d.h., dass die Öffnungswinkel um höchstens 20 Prozent voneinander abweichen. Vorzugsweise ist der Öffnungswinkel des Ausströmbereichs ebenfalls kleiner als 120 Grad.

In einer Weiterbildung der Erfindung wird vorgeschlagen, dass der Öffnungswinkel des Einströmbereichs und der Öffnungswinkel des Ausströmbereichs jeweils eine Winkelhalbierende aufweisen, die um zumindest 160 Grad und/oder höchstens 250 Grad gegeneinander versetzt sind. Dadurch kann die Umlenkung des Luftstroms innerhalb des Windradbereichs besonders vorteilhaft erreicht werden. Die Winkelhalbierenden stehen dabei vorzugsweise in einem Winkel ungleich 180 Grad aufeinander.

Weiter wird vorgeschlagen, dass der Einströmbereich zumindest eine Engstelle aufweist. Dadurch kann der Einströmbereich vorteilhaft als ein Konfusor ausgebildet werden, durch welchen eine Strömungsgeschwindigkeit im Vergleich zu einer Umgebung erhöht werden kann, wodurch der Wirkungsgrad weiter gesteigert werden kann. Vorzugsweise wirkt dabei das Gebäude mit der Gehäuseeinheit des Windkraftmoduls zusammen, wodurch insbesondere der Konfusor, welcher durch den Einströmbereich ausgebildet wird, aber auch eine Diffusor, welcher durch den Ausströmbereich ausgebildet wird, einen Wirkungsbereich aufweisen, der größer ist als eine tatsächliche Abmessung des Windkraftmoduls. Unter einer "Engstelle" soll dabei insbesondere verstanden werden, dass sich eine Querschnittsfläche des Einströmbereichs entlang der Strömungsrichtung des Luftstroms in zumindest einem Teilbereich kontinuierlich verjüngt.

In einer besonders vorteilhaften Ausgestaltung umfasst das Windkraftmodul eine Strömungsleiteinheit, die den Einströmbereich in zumindest drei strömungstechnisch parallel zueinander angeordnete Teilbereiche unterteilt, welche unterschiedlich strömungstechnisch optimiert sind. Dadurch kann das Windkraftmodul besonders vorteilhaft an ein Strömungsfeld, wie es sich insbesondere im Bereich einer Gebäudekante einstellt, angepasst werden. Durch eine solche Ausgestaltung kann insbesondere erreicht werden, dass einerseits die Druckdifferenz zwischen dem Staudruckbereich und dem Leebereich vorteilhaft in einen Luftstrom zum Betrieb der Windradeinrichtung umgesetzt werden kann. Zudem kann gleichzeitig die Luftströmung, welche an dem Gebäude vorbei strömt effektiv genutzt werden, wodurch ein besonders hoher Wirkungsgrad erreicht werden kann.

Vorzugsweise weist die Strömungsleiteinheit zumindest zwei Leitbleche auf, welche die Teilbereiche strömungstechnisch voneinander trennen. Dadurch kann jeder der Teilbereiche vorteilhaft auf einen Teil des Strömungsfelds im Bereich der Gebäudekante angepasst werden, wodurch eine hohe Anpassbarkeit an einen Installationsort erreicht werden kann. Vorzugsweise bilden die zumindest drei Teilbereiche jeweils einen Konfusor aus, d.h. die Leitbleche bilden in jedem der Teilbereiche eine der Engstellen aus, durch welche jeder der Teilbereich als eine Düse zur Erhöhung einer Strömungsgeschwindigkeit wirkt, wodurch der Einströmbereich auf die unterschiedlichen Anforderungen gut angepasst werden kann.

Weiter wird vorgeschlagen, dass das Windkraftmodul eine Aufstandsebene und eine Einströmöffnung aufweist, die einen Winkel von zumindest 30 Grad und/oder höchstens 70 Grad einschließen. Dadurch ist die Einströmöffnung gegenüber der Aufstandsfläche geneigt, wodurch das Windkraftmodul insbesondere auf einem Flachdach einfach befestigt werden kann, während durch die nach unten geneigte Einströmöffnung einfach der Differenzdruck zwischen dem Staudruckbereich vor der Gebäudefassade und der Leebereich über dem Flachdach vorteilhaft genutzt werde kann. Unter einer "Einströmöffnung" soll dabei insbesondere eine von Vorderkanten der Gehäuseeinheit umschlossene Öffnung verstanden werden, an die der Einströmbereich anschließt.

Besonders vorteilhaft sind dabei die drei Teilbereiche in Bezug auf die Aufstandsebene vertikal gestapelt. Dadurch kann das Strömungsfeld im Bereich der Gebäudekante gezielt auf die einzelnen Teilbereiche aufgeteilt werden, welche jeweils einzeln optimiert werden können.

Vorzugsweise ist die Windradeinrichtung als eine Ossberger-Turbine ausgeführt. Dadurch kann ein besonders hoher Wirkungsgrad erreicht werden. Unter einer "Ossberger-Turbine" soll dabei insbesondere eine Windradeinrichtung verstanden werden, die eine quer zu einer Strömungsrichtung des Luftstroms gerichtete Rotationsachse aufweist und die Schaufelblätter aufweist, welche zumindest teilweise in einer Richtung senkrecht zu der Rotationsachse durchströmt werden.

Zudem wird vorgeschlagen, dass die Windradeinrichtung eine Rotationsachse aufweist, die parallel zu der Aufstandsebene angeordnet ist. Dadurch kann der Luftstrom an der Gebäudekante vorteilhaft durch die Windradeinrichtung durchgeführt werden.

Außerdem wird vorgeschlagen, dass das Windkraftmodul ein mit der Gehäuseeinheit zumindest verbundenes Solarmodul aufweist. Durch die Kombination des Windkraftmoduls mit dem Solarmodul kann eine hohe Zuverlässigkeit bei der Einspeisung in ein Stromnetz erreicht werden, da insbesondere tagsüber meistens entweder mittels des Solarmoduls und/oder mittels des Windkraftmoduls Leistung erzeugt werden kann. Zudem kann durch die Kombination auf eine separate Aufständerung für die Solarmodule verzichtet werden, da die Gehäuseeinheit direkt als Halterung zur Befestigung und Ausrichtung der Solarmodule verwendet werden kann. Unter "zumindest verbunden" soll dabei sowohl "getrennt ausgeführt, jedoch fest miteinander verbunden" als auch "zumindest teilweise einstückig ausgeführt" verstanden werden.

Weiter wird eine Windkraftanlage mit zumindest zwei erfindungsgemäßen Windkraftmodulen, die mechanisch miteinander gekoppelt sind, vorgeschlagen. Dadurch kann ein Generator gleichzeitig mechanisch mit mehreren Windkraftmodulen gekoppelt werden, wodurch insbesondere Herstellungskosten verringert werden können. Grundsätzlich ist aber auch gleichzeitig oder alternativ denkbar, mehrere Generatoren vorzusehen, die jeweils mit zumindest einem der Windkraftmodule gekoppelt sind, und die Generator elektrisch miteinander zu einem Netz zu verbinden.

Außerdem wird ein Gebäude mit zumindest einem erfindungsgemäßen Windkraftmodul, insbesondere mit einer erfindungsgemäßen Windkraftanlage, und einer Gebäudekante, an der das zumindest eine Windkraftmodul angeordnet ist, vorgeschlagen.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes Windkraftmodul im Querschnitt und
- Fig. 2: ein Gebäude mit einer Windkraftanlage mit miteinander gekoppelten Windkraftmodulen.

### Beschreibung des Ausführungsbeispiels

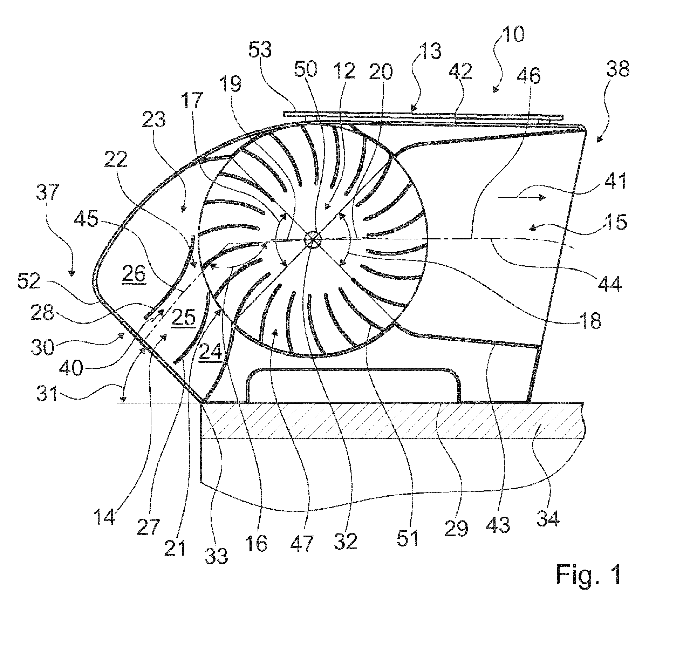

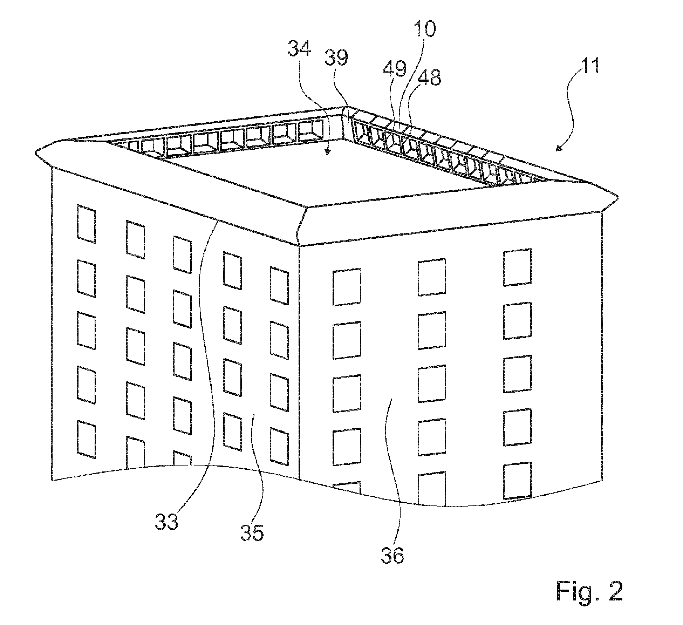

Die Figuren 1 und 2 zeigen ein Gebäude 11 mit einer Windkraftanlage. Die Windkraftanlage umfasst eine Mehrzahl von Windkraftmodulen 10. Das Gebäude 11 weist eine Gebäudekante 33 auf, an der die Windkraftmodule 10 angeordnet sind. In dem dargestellten Ausführungsbeispiel ist die horizontal verlaufende Gebäudekante 33 als ein Übergang von einem Flachdach 34 zu einer Fassade 35 ausgebildet. Grundsätzlich kann die Windkraftanlage aber auch an einer vertikal verlaufenden Gebäudekante, die als ein Übergang zwischen zwei Fassaden 35, 36 ausgebildet ist, angeordnet werden. Für die Anordnung der Windkraftanlage sind grundsätzlich alle Gebäudekanten geeignet, an denen sich bei Wind ein Staudruckbereich 37 und ein Leebereich 38 ausbilden. In dem dargestellten Ausführungsbeispiel erstreckt sich die Windkraftanlage entlang der kompletten als Dachkante des Flachdachs 34 ausgebildeten Gebäudekante 33.

An der Gebäudekante 33 bildet sich bei Wind ein Strömungsfeld aus, welches in dem Staudruckbereich 37 relativ zu einem statischen Umgebungsdruck einen Überdruck aufweist, wodurch zwischen dem Staudruckbereich 37 vor der Gebäudekante 33 und einem Leebereich 38 hinter der Gebäudekante 33 eine Druckdifferenz entsteht. Die Windkraftmodule 10 sind auf eine Nutzung dieser Druckdifferenz optimiert. Die Windkraftmodule 10 sind dazu zwischen dem Staudruckbereich 37 und dem Leebereich 38 angeordnet. Gleichzeitig sind die Windkraftmodule 10 auch dazu vorgesehen, den Wind außerhalb eines unmittelbaren Einflussbereichs der Gebäudekante 33 zu nutzen.

Die Windkraftmodule 10, von denen eines näher beschrieben wird, sind mechanisch miteinander gekoppelt. Die Windkraftmodule 10 weisen jeweils eine unter Wirkung eines Luftstroms betreibbare Windradeinrichtung 12 auf. Die Windradeinrichtungen 12 der miteinander gekoppelten Windkraftmodule 10 sind koaxial zueinander angeordnet. Die Windradeinrichtungen 12 jeweils benachbart angeordneter Windkraftmodule 10 sind dabei drehfest miteinander verbunden. Die einzelnen Windkraftmodule 10 sind somit mechanisch in Reihe geschaltet. Die Windkraftmodule 10 sind dabei über ein Spaltsystem voneinander entkoppelt, beispielsweise um Materialausdehnung bei Temperaturschwankung oder Installationstoleranzen auszugleichen.

Zur Umsetzung der von den Windkraftmodulen 10 erzeugten mechanischen Energie in elektrische Energie weist die dargestellte Windkraftanlage mehrere Generatormodule 39 auf. Die Generatormodule 39 sind als Abschlussmodule ausgebildet. In dem dargestellten Ausführungsbeispiel sind die Generatormodule 39 als Eckmodule ausgebildet. Die Windkraftmodule 10 sind dadurch in axialer Richtung zwischen den Generatormodulen 39 angeordnet. Grundsätzlich wäre es aber auch denkbar, das Generatormodul 39 zur Anordnung zwischen zwei der Windkraftmodule 10 vorzusehen. Insbesondere bei einer solchen Ausgestaltung könnte die Windkraftanlage seitliche Abschlussmodule aufweisen, welche noch andere Funktionen erfüllen, wie beispielsweise ein Einstieg in ein Dachbefahrungssystem bei einem Hochhaus.

Die Generatormodule 39 und die Windkraftmodule 10 weisen einander zumindest ähnliche äußere Konturen auf. Insbesondere bei einer Anordnung des Generatormoduls 39 zwischen zwei der Windkraftmodule 10 kann das Generatormodul 39 eine äußere Kontur aufweisen, die ununterscheidbar von der äußeren Kontur der Windkraftmodule 10 ist. Das Generatormodul 39 kann dadurch unauffällig in die Windkraftmodule 10 integriert werden. Insbesondere die Windkraftmodule 10, aber auch die Generatormodule 39, weisen dabei verstellbare und/oder austauschbare Blenden auf, welche für einen direkten Anschluss an das Gebäude 11, beispielsweise als Fassadenanschluss oder als Dachanschluss, dienen.

Die Generatormodule 39 weisen jeweils einen nicht näher dargestellten Generator auf, der mechanisch mit den Windradeinrichtungen 12 der Windkraftmodule 10 gekoppelt ist. Die Generatormodule 39 umfassen jeweils ein Gehäuse, innerhalb dessen der Generator angeordnet ist. Das Gehäuse ist zusätzlich dazu vorgesehen, eine Leistungselektronik für den Generator aufzunehmen. Auch weitere Komponenten zum Betrieb der Windkraftanlage können in dem Gehäuse des Generatormoduls 39 angeordnet werden.

Die Windradeinrichtung 12, die das Windkraftmodul 10 aufweist, wird unter Wirkung des Luftstroms betrieben. Weiter weist das Windkraftmodul 10 eine Gehäuseeinheit 13 auf, welche zumindest die Windradeinrichtung 12 aufnimmt. Grundsätzlich kann die Gehäuseeinheit 13 noch weitere Komponenten aufnehmen. Die Gehäuseeinheit 13 bildet einen der Windradeinrichtung 12 vorgelagerten Einströmbereich 14 und einen der Windradeinrichtung 12 nachgelagerten Ausströmbereich 15 aus.

Der Einströmbereich 14 ist dem Staudruckbereich 37 der Gebäudekante 33 zugewandt. Durch den Einströmbereich 14 wird einerseits der Wind eingefangen und als ein Luftstrom durch die Windradeinrichtung 12 hindurchgeführt. Zeitgleich ist der Einströmbereich 14 dazu vorgesehen, die Druckdifferenz zwischen dem Staudruckbereich 37 und dem Leebereich 38 in einen die Windradeinrichtung 12 antreibenden Luftstrom umzusetzen. Insbesondere der Einströmbereich 14 ist dabei dazu vorgesehen, bei geringen Windgeschwindigkeiten, beispielsweise kleiner als 5 m/s einen nahezu laminaren Luftstrom zu erzeugen und eine Strömungsgeschwindigkeit in dem Einströmbereich 14 im Vergleich zur Windgeschwindigkeit in der Umgebung zu erhöhen. Bei hohen Windgeschwindigkeiten, beispielsweise größer als 10 m/s, ist der Einströmbereich 14 dazu vorgesehen, einen turbulenten Luftstrom in dem Einströmbereich 14 zu erzeugen und eine Strömungsgeschwindigkeit im Vergleich zur Windgeschwindigkeit in der Umgebung abzusenken.

Der Ausströmbereich 15 ist dem Leebereich 38 des Strömungsfelds zugewandt. Der Ausströmbereich 15 dient ebenfalls zur Erhöhung der Strömungsgeschwindigkeit. Die Windradeinrichtung 12 ist entlang einer Strömungsrichtung 40, 41 des Luftstroms zwischen dem Einströmbereich 14 und dem Ausströmbereich 15 angeordnet. Der Einströmbereich 14 und der Ausströmbereich 15 sind in einem mittleren Winkel 16 ungleich 180 Grad zueinander angeordnet. Der Auströmbereich bildet dabei einen Diffusor mit einem, sich ausgehend von der Windradeinrichtung 12, vergrößernden Querschnitt aus.

Der Einströmbereich 14 und der Ausströmbereich 15 weisen jeweils eine mittlere Strömungsrichtung 40, 41 auf. Der Luftstrom, der das Windkraftmodul 10 durchströmt, strömt im Einströmbereich 14 im Wesentlichen entlang der mittleren Strömungsrichtung 40, die der Einströmbereich 14 aufweist. Im Ausströmbereich 15 strömt der Luftstrom im Wesentlichen entlang der mittleren Strömungsrichtung 41, die der Ausströmbereich 15 aufweist. Der mittlere Winkel 16, unter dem der Einströmbereich 14 und der Ausströmbereich 15 zueinander angeordnet sind, entspricht einem Winkel, unter dem die mittlere Strömungsrichtung 40 des Einströmbereichs 14 und die mittlere Strömungsrichtung 41 des Ausströmbereichs 15 zueinander angeordnet sind.

Der mittlere Winkel 16, den der Einströmbereich 14 und der Ausströmbereich 15 einschließt, weist zumindest 120 Grad und höchstens 170 Grad auf. Der Luftstrom, der das Windkraftmodul 10 durchströmt, wird dadurch in der Windradeinrichtung 12 um zumindest 10 Grad umgelenkt. In dem dargestellten Ausführungsbeispiel beträgt der mittlere Winkel 16 ca. 120 Grad, d.h. der Luftstrom wird in der Windradeinrichtung 12, die als eine Durchströmungsturbine ausgebildet ist, um ca. 120 Grad umgelenkt.

Die Gehäuseeinheit 13 weist ein oberes Wandelement 42 und ein unteres Wandelement 43 auf, die den Einströmbereich 14 und den Ausströmbereich 15 begrenzen. Die Wandelemente 42, 43 begrenzen einen Innenraum der Gehäuseeinheit 13, für den eine virtuelle Mittellinie 44 definierbar ist. Die Mittellinie 44, welche mittig zwischen dem oberen Wandelement 42 und dem unteren Wandelement 43 verlaufen soll, ist damit eine geometrische Eigenschaft der Gehäuseeinheit 13. In dem Einströmbereich 14 und in dem Ausströmbereich 15 ist die virtuelle Mittellinie 44 näherungsweise durch jeweils eine Gerade 45, 46 ersetzbar. Orientierungen dieser Geraden 45, 46 stimmen mit den Strömungsrichtungen 40, 41 in dem Einströmbereich 14 und in dem Ausströmbereich 15 im Wesentlichen überein. Die Geraden 45, 46, welche durch die Mittellinie 44 definierbar sind, schließen damit ebenfalls einen Winkel ein, der zumindest 120 Grad und höchstens 170 Grad aufweist.

Die Windradeinrichtung 12 weist eine Rotationsachse 32 auf, auf welche bezogen der Einströmbereich 14 und der Ausströmbereich 15 jeweils einen Öffnungswinkel 17, 18 von zumindest 60 Grad aufweisen. Der von der Gehäuseeinheit 13 umspannte Innenraum ist in den Einströmbereich 14, einen Windradbereich 47 und den Ausströmbereich 15 unterteilt. Der Einströmbereich 14, der Windradbereich 47 und der Ausströmbereich 15 gehen jeweils unmittelbar ineinander über. Der Windradbereich 47, der durch einen Bereich, in dem die Windradeinrichtung 12 angeordnet ist, definiert ist, weist vorzugsweise eine zylinderförmige Grundform auf. Ein Fläche, an der der Einströmbereich 14 in den Windradbereich 47 übergeht, und eine Fläche, an der der Windradbereich 47 in den Ausströmbereich 15 übergeht, sind damit in Form von Zylindermantelflächen ausgestaltet. Bezogen auf die Rotationsachse 32 der Windradeinrichtung 12 weisen diese Zylindermantelflächen in Umfangsrichtung eine Maximalerstreckung auf, die bezogen auf die Rotationsachse 32 den Öffnungswinkeln 17, 18 von zumindest 60 Grad entsprechen.

Der Öffnungswinkel 17 des Einströmbereichs 14 und der Öffnungswinkel 18 des Ausströmbereichs 15 weisen jeweils eine Winkelhalbierende 19, 20 auf, die um zumindest 160 Grad und höchstens 250 Grad gegeneinander versetzt sind. In dem dargestellten Ausführungsbeispiel sind die Winkelhalbierenden 19, 20 um 10 Grad gegeneinander versetzt. Ein Winkel, um den die beiden Winkelhalbierenden 19, 20 gegeneinander versetzt sind, ist dabei ausgehend von der Winkelhalbierenden 19 des Öffnungswinkels 17 des Einströmbereichs 14 in mathematisch positiver Drehrichtung definiert.

Zur Erhöhung der Strömungsgeschwindigkeit weist der Einströmbereich 14 eine Mehrzahl von Engstellen 21, 22, 23 auf. Die Engstellen 21, 22, 23 sind strömungstechnisch parallel zueinander angeordnet. Der Einströmbereich 14 weist eine Strömungsleiteinheit auf, die den Einströmbereich 14 in drei strömungstechnisch parallel zueinander angeordnete Teilbereiche 24, 25, 26 unterteilt. Jeder der Teilbereiche 24, 25, 26 weist eine der Engstellen 21, 22, 23 auf.

Die Teilbereiche 24, 25, 26 sind unterschiedlich strömungstechnisch optimiert. Der erste Teilbereich 24 ist insbesondere dazu vorgesehen, die Druckdifferenz zwischen dem Staudruckbereich 37 vor der Gebäudekante 33 und dem Leebereich 38 hinter der Gebäudekante 33 in den Luftstrom zum Betrieb der Windradeinrichtung 12 umzusetzen. Der zweite Teilbereich 25 ist insbesondere dazu vorgesehen, den Luftstrom, welcher die Gebäudekante 33 umströmt, einzufangen und durch die Windradeinrichtung 12 zu leiten. Der dritte Teilbereich 26 ist dazu vorgesehen, den Luftstrom, der normalerweise nahezu ungestört über die Gebäudekante 33 hinwegströmt, einzufangen und an die Windradeinrichtung 12 zu leiten.

Zur Unterteilung des Einströmbereichs 14 weist die Strömungsleiteinheit zwei Leitbleche 27, 28 auf, die innerhalb des Einströmbereichs 14 angeordnet sind und die Teilbereiche 24, 25, 26 strömungstechnisch voneinander trennen. Die Leitbleche 27, 28 weisen eine Vorderkante und einer Hinterkante auf, die parallel zu der Aufstandsebene 29 verlaufen. Die Gehäuseeinheit 13 weist zwei den Einströmbereich 14 seitlich begrenzende Wandelemente 48, 49 auf, an welchen die Leitbleche 27, 28 befestigt sind. Die Leitbleche 27, 28 sind dabei grundsätzlich in verschiedenen Einbaulagen an den Wandelementen 48, 49 befestigbar. Eine Form der Leitbleche 27, 28 und eine Einbaulage kann an eine spezifische Windsituation, welche an einem Installationsort für das Windkraftmodul 10 herrscht, angepasst werden.

Die Teilbereiche 24, 25, 26 sind in Bezug auf die Aufstandsebene 29 vertikal gestapelt. Der erste Teilbereich 24 ist dabei unten angeordnet. Der erste Teilbereich 24 wird in vertikaler Richtung durch das untere Wandelement 43 und das untere Leitblech 28 begrenzt. Der zweite Teilbereich 25 ist mittig angeordnet. Er wird in vertikaler Richtung durch die beiden Leitbleche 27, 28 begrenzt. Der dritte Teilbereich 25 ist oben angeordnet und wird in vertikaler Richtung durch das obere Leitblech 27 und das obere Wandelement 42 begrenzt. In Abhängigkeit von dem Installationsort können dabei weitere Leitbleche und weitere Teilbereich mit einer strömungstechnischen Optimierung auf den Installationsort vorgesehen werden.

Das Windkraftmodul 10 weist eine Einströmöffnung 30 auf, die mit der Aufstandsebene 29 einen Winkel 31 von zumindest 30 Grad und höchstens 70 Grad einschließt. Die Einströmöffnung 30 wird durch die vier Wandelemente 42, 43, 48, 49, die den Einströmbereich 14 horizontal und vertikal begrenzen, ausgebildet. Die Wandelemente 42, 43, 48, 49, die in Form von Blechen ausgebildet sind, weisen jeweils eine Vorderkante auf, welche die Einströmöffnung 30 umschließen. Insbesondere die Vorderkante des oberen Wandelements 42 und die Vorderkante des unteren Wandelements 43 sind dabei parallel zueinander angeordnet. Die beiden Vorderkannten spannen eine Ebene auf, die mit der Aufstandsebene 29 den Winkel 31 von zumindest 30 Grad und höchstens 70 Grad einschließt. In dem dargestellten Ausführungsbeispiel schließt die Ebene, welche durch die Vorderkanten des oberen Wandelements 42 und die Vorderkante des unteren Wandelements 43 aufgespannt wird, mit der Aufstandsebene 29 einen Winkel 31 von ca. 60 Grad ein.

Die Windradeinrichtung 12 ist als eine Ossberger-Turbine ausgeführt. Die Rotationsachse 32 der Windradeinrichtung 12 ist parallel zu der Aufstandsebene 29 angeordnet. Der Luftstrom wird in Bezug auf die Rotationsachse 32 quer durch die Windradeinrichtung 12 hindurchgeleitet. Zur Erhöhung eines Wirkungsgrads ist die Strömungsleiteinheit dazu vorgesehen, den Luftstrom im Einströmbereich 14 umzulenken. Insbesondere die Leitbleche 27, 28 weisen dabei eine Krümmung auf, durch die der quer zur Rotationsachse 32 einströmende Luftstrom im Bereich der Windradeinrichtung 12 in Richtung einer Drehrichtung der Windradeinrichtung 12 umgelenkt wird.

Die Windradeinrichtung 12 umfasst eine Welle 50 zur Übertragung von Drehmomenten und eine Mehrzahl von Schaufelblättern 51, die symmetrische um die Welle 50 angeordnet sind. Zur Fixierung der Schaufelblätter 51 umfasst die Windradeinrichtung 12 zwei nicht näher dargestellte Blattaufnahmescheiben. Die Welle 50, die Schaufelblätter 51 und die Blattaufnahmescheiben rotieren im Betrieb um die Rotationsachse 32. Die Windradeinrichtung 12 weist eine Schaufelblatttiefe mit einem Faktor von 0,4 - 0,6 in Bezug auf einen Turbinenradius auf.

Die Welle 50 durchsetzt einen Innenraum, der von den Schaufelblättern 51 umgeben wird. Insbesondere bei hohen Windgeschwindigkeiten bildet die Welle 50 einen Überlastungsschutz aus, welcher bei hohen Windgeschwindigkeiten Verwirbelungen erzeugt. Die Welle 50 bewirkt, dass bei hohen Windgeschwindigkeiten im Windradbereich 47 ein turbulenter Luftstrom erzeugt wird. Als zusätzlichen Überlastungsschutz weist das Windkraftmodul 10 ein in der Einströmöffnung 30 angeordnetes Gitter 52 auf, welches bei hohen Windgeschwindigkeiten zusätzliche Verwirbelungen erzeugt. Das Gitter 52 ist gleichzeitig dazu vorgesehen, das Windkraftmodul 10 vor Verunreinigungen zu schützen.

Das Windkraftmodul 10 weist weiter ein mit der Gehäuseeinheit 13 verbundenes Solarmodul 53 auf. Das Solarmodul 53 ist fest mit dem oberen Wandelement 43 verbunden. Der Luftstrom, der durch das Windkraftmodul 10 hindurchgeführt wird, ist zur Kühlung des Solarmoduls 53 vorgesehen. Das obere Wandelement 42 kann dabei auch direkt als das Solarmodul 53 ausgebildet sein, d.h. die Gehäuseeinheit 13, insbesondere das obere Wandelement 42, und das Solarmodul 53 können grundsätzlich einstückig ausgeführt werden. Alternativ ist aber auch eine mehrteilige Ausgestaltung denkbar.

Die Windkraftanlage kann dabei ein oder mehrere Wechselrichter aufweisen, die für die Solarmodule 53 mehrerer Windkraftmodule 10 vorgesehen sind. Vorzugsweise sind die Wechselrichter jeweils in den Generatormodulen 39 angeordnet. Grundsätzlich kann aber jedes Windkraftmodul 10 auch einen eigenen Wechselrichter aufweisen.

Eine Verkabelung für die Solarmodule 53 kann grundsätzlich von einer Verkabelung der Generatoren getrennt werden. Insbesondere wenn jedes der Windkraftmodule 10 einen eigenen Generator aufweist, können zwei voneinander unabhängige Stromkreise ausgebildet werden. Um jedes der Windkraftmodule 10 mit einem Generator für die Windradeinrichtung 12 und einem Wechselrichter für das Solarmodul 53 versehen zu können, kann die Windradeinrichtung 12 in einer Breite ausgeführt werden, die kleiner ist als eine Breite der Gehäuseeinheit 13. In einer typischen Dimensionierung der Windkraftmodule 10 weist die Gehäuseeinheit 13 eine Breite von ca. 2,00 m, im Bereich der Einströmöffnung 30 eine Höhe von ca. 1,00 m, eine maximale Höhe von ca. 1,60 m und eine Tiefe von ca. 2,50 m auf. Ist die Breite der Windradeinrichtung 12 gegenüber der Breite der Gehäuseeinheit 13 um zumindest 10 Prozent verkleinert, kann typischerweise ausreichend Bauraum für die Anordnung des Generators und des Wechselrichters sowie weiterer notwendiger Komponenten geschaffen werden. Der dabei freiwerdende Bauraum kann aber auch zur Anordnung einer Koppeleinheit zur mechanischen Verbindung der Windradeinrichtungen 12 sowie zur Anordnung von elektrischen Verbindungskomponenten genutzt werden.

## Patentansprüche

1. Windkraftmodul zur Anordnung an einem Gebäude (11), mit zumindest einer unter Wirkung eines Luftstroms betreibbaren Windradeinrichtung (12), die zum Antrieb eines Generators vorgesehen ist, mit einer die Windradeinrichtung (12) aufnehmenden Gehäuseeinheit (13), die einen der Windradeinrichtung (12) vorgelagerten Einströmbereich (14) und einen der Windradeinrichtung (12) nachgelagerten Ausströmbereich (15) ausbildet,
**dadurch gekennzeichnet, dass**
der Einströmbereich (14) und der Ausströmbereich (15) unter einem mittleren Winkel (16) ungleich 180 Grad zueinander angeordnet sind.

2. Windkraftmodul nach Anspruch 1,
**dadurch gekennzeichnet, dass**
der mittlere Winkel (16), der von dem Einströmbereich (14) und dem Ausströmbereich (15) eingeschlossen wird, zumindest 120 Grad und/oder höchstens 170 Grad beträgt.

3. Windkraftmodul nach Anspruch 1 oder 2,
**dadurch gekennzeichnet, dass**
der Einströmbereich (14) einen Öffnungswinkel (17) von zumindest 60 Grad aufweist.

4. Windkraftmodul nach einem der vorhergehenden Ansprüche,
**dadurch gekennzeichnet, dass**
der Ausströmbereich (15) einen Öffnungswinkel (18) von zumindest 60 Grad aufweist.

5. Windkraftmodul nach den Ansprüchen 3 und 4,
**dadurch gekennzeichnet, dass**
der Öffnungswinkel (17) des Einströmbereichs (14) und der Öffnungswinkel (18) des Ausströmbereichs (15) jeweils eine Winkelhalbierende (19, 20) aufweisen, die um zumindest 160 Grad und/oder höchstens 250 Grad gegeneinander versetzt sind.

6. Windkraftmodul nach einem der vorhergehenden Ansprüche,
**dadurch gekennzeichnet, dass**
der Einströmbereich (14) zumindest eine Engstelle (21, 22, 23) aufweist.

7. Windkraftmodul nach einem der vorhergehenden Ansprüche,
**gekennzeichnet durch**
eine Strömungsleiteinheit, die den Einströmbereich (14) in zumindest drei strömungstechnisch parallel zueinander angeordnete Teilbereiche (24, 25, 26) unterteilt, welche unterschiedlich strömungstechnisch optimiert sind.

8. Windkraftmodul nach den Ansprüchen 6 und 7,
**dadurch gekennzeichnet, dass**
die Strömungsleiteinheit zumindest zwei Leitbleche (27, 28) aufweist, welche die Teilbereiche (24, 25, 26) strömungstechnisch voneinander trennen.

9. Windkraftmodul zumindest nach Anspruch 2,
**gekennzeichnet durch**
eine Aufstandsebene (29) und eine Einströmöffnung (30), die einen Winkel (31) von zumindest 30 Grad und/oder höchstens 70 Grad einschließen.

10. Windkraftmodul zumindest nach den Ansprüchen 7 und 9,
**dadurch gekennzeichnet, dass**
die drei Teilbereiche (24, 25, 26) in Bezug auf die Aufstandsebene (29) vertikal gestapelt sind.

11. Windkraftmodul nach einem der vorhergehenden Ansprüche,
**dadurch gekennzeichnet, dass**
die Windradeinrichtung (12) als eine Ossberger-Turbine ausgeführt ist.

12. Windkraftmodul zumindest nach Anspruch 9,
**dadurch gekennzeichnet, dass**
die Windradeinrichtung (12) eine Rotationsachse (32) aufweist, die parallel zu der Aufstandsebene angeordnet ist.

13. Windkraftmodul nach einem der vorhergehenden Ansprüche,
**gekennzeichnet durch**
ein mit der Gehäuseeinheit (13) zumindest verbundenes Solarmodul (53).

14. Windkraftanlage mit zumindest zwei Windkraftmodulen (10) nach einem der vorhergehenden Ansprüche, die mechanisch miteinander gekoppelt sind.

15. Gebäude mit zumindest einem Windkraftmodul (10) nach einem der Ansprüche 1 bis 13, insbesondere mit einer Windkraftanlage nach Anspruch 14, und einer Gebäudekante (33), an der das zumindest eine Windkraftmodul (10) angeordnet ist.
